# EUROPEAN PATENT APPLICATION

(11) **EP 1 206 109 A1**
(43) Date of publication of application: **15.05.2002**
(21) Application number: 00403084.7
(22) Date of filing: 07.11.2000
(51) Int. Cl.: H04M 11/06

(54) **Device with ethernet and atmforum interfacing capability**

(71) Applicant: ALCATEL, 75008 Paris (FR)
(72) Inventor: Jeanjean, François, 1780 Wemmel (BE); VanZieleghem, Etienne, 1360 Perwez (BE)
(74) Representative: Plas, Axel

(57) **Abstract**

In a device (ADSL_MODEM2) having Ethernet interfacing capability and ATMForum interfacing capability, a single connector (ETH/ATMF_CON) with four pairs of pins (P1, P2, P3, P4) is provided. This connector (ETH/ATMF_CON) is able to interface with an Ethernet plug and to interface with an ATMForum plug.

## Description

The present invention relates to a device having Ethernet and ATMForum interfacing capability as defined in the non-characteristic part of claim 1.

Such a device is already available on the market, e.g. the Alcatel Asymmetric Digital Subscriber Line modem SpeadTouch™ Pro whose feature list is published on the Internet at the URL 'http://www.alcatel.com/telecom/asd/keytech/adsl/modem/pro.htm'. This ADSL modem is equipped with a first connector (the so called 10Base T interface) that interfaces with an Ethernet plug and optionally with a second connector (the so called ATMF-25 interface) that interfaces with an ATMForum plug. More precisely, the SpeedTouch™ ADSL modem is released in three version: in variant A only the Ethernet connector can be used, in variant B only the ATMForum connector can be used, and in variant C both the Ethernet connector and the ATMForum connector can be used but not simultaneously. In variant C, the user has to select via a software application either the Ethernet connector or the ATMForum connector. Whereas variants A and B are limited in use (no connection to an ATM network possible for variant A and no connection to an Ethernet network possible for variant B), variant C can be connected to both ATM and Ethernet networks but suffers the drawback that it cannot be configured in a user-friendly way since the user needs to know which plug should be inserted in which connector, and he/she needs to configure the modem via software.

An object of the present invention is to provide a device with Ethernet and ATMForum interfacing capability, similar to the known one, but which can be configured in a user-friendly way. Moreover, it is an object of the present invention to reduce the number of components and required space in the device for Ethernet interfacing and ATMForum interfacing.

According to the invention, this object is achieved by the device defined in claim 1.

Indeed, if the Ethernet interface and ATMForum interface are integrated into a single connector, the user does not have to find out where the plug has to be inserted. Moreover, a single connector occupies half the space of two connectors in the device and components that perform similar functions in the Ethernet interfacing and ATMForum interfacing have to be provided only once whereas they had to be provided twice in the known ADSL modem.

The present invention is based on the insight that the Ethernet connector and ATMForum connector of the known ADSL modem have equal sizes, use the same pair of pins for receiving data and different pairs of pins for transmitting data. As will be explained below, in a preferred embodiment of the invention, the Ethernet receiver and ATMForum receiver, which use the third pair of pins of the connector, are integrated into a single receiver. This integration of the receivers allows for component and space reduction.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional feature of a preferred embodiment of the device according to the present invention is defined by claim 2.

Thus, the first pair of pins is used for Ethernet transmission, the second pair of pins is used for ATMForum transmission, the third pair of pins is used for Ethernet reception as well as ATMForum reception, and the fourth pair of pins is left unused. In this way, the pin convention of the Ethernet and ATMForum standards remains respected and the number of components required to perform the interfacing is reduced thanks to the integration of the Ethernet receiver and ATMForum receiver into a single receiver.

A further optional feature of the preferred embodiment of the device according to the present invention is defined by claim 3.

In this way, automatic detection of an Ethernet connection or an ATMForum connection is realized so that it is avoided that the user has to pre-configure the device for Ethernet interfacing or ATMForum interfacing. This further increases the user-friendliness.

Yet another optional feature of the preferred embodiment of the device according to the present invention is defined by claim 4.

Thus, upon automatic detection of the type of connection (Ethernet or ATMForum), the correct transmitter (either the Ethernet transmitter at the first pair of pins or the ATMForum transmitter at the second pair of pins) can be automatically activated so that no user intervention at all is needed to configure the right interface.

As is defined by claims 5, 6, 7 and 8, the device amongst other alternatives such as a cable modem or a Symmetric Digital Subscribe Line (SDSL) modem, can be an Asymmetric Digital Subscriber Line (ADSL) modem, a Very High Speed Digital Subscriber Line (VDSL) modem, an Integrated Digital Services (ISDN) modem or even a test apparatus.

The above and other objects and features of the invention will become more apparent and the invention itself will be best understood by referring to the following description of an embodiment taken in conjunction with the accompanying drawings wherein:
Fig. 1 represents a known Asymmetric Digital Subscriber Line modem ADSL-MODEM1 with Ethernet and ATMForum interfacing capability;
Fig. 2 represents an Asymmetric Digital Subscriber Line modem ADSL_MODEM2 with Ethernet and ATMForum interfacing capability according to the present invention; and
Fig. 3 represents a functional block scheme of the connector ETH/ATMF_CON and interfacing circuitry coupled thereto in the Asymmetric Digital Subscriber Line modem ADSL_MODEM2 of Fig. 2.

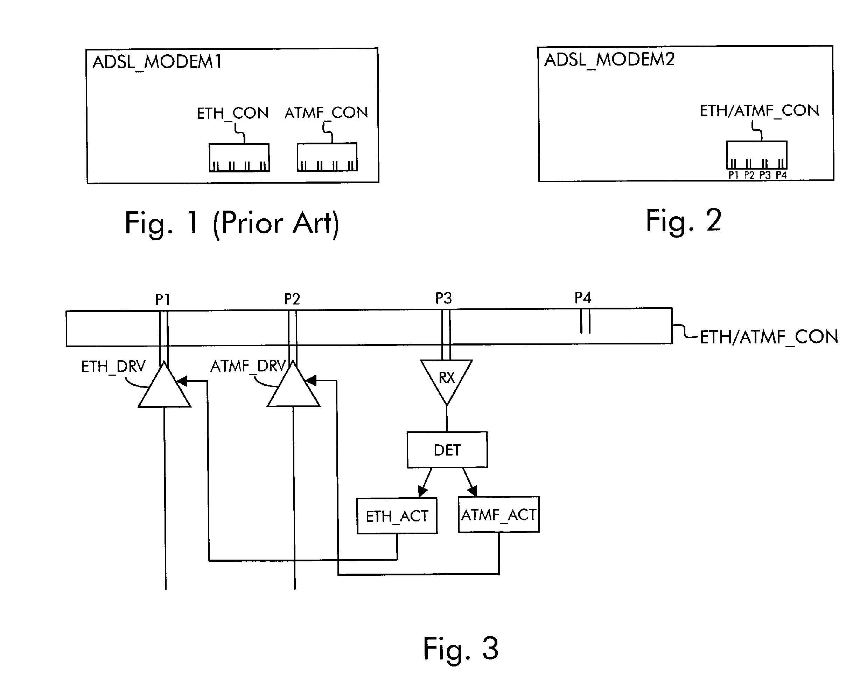

The known ADSL modem ADSL_MODEM1 of Fig. 1 is equipped with an Ethernet connector ETH_CON and Ethernet interface. The Ethernet interface consists of an Ethernet transmitter connected to the first pair of pins of the Ethernet connector ETH_CON, and an Ethernet receiver connected to the third pair of pins of the Ethernet connector ETH_CON. The second and fourth pairs of pins of the Ethernet connector ETH_CON are left unused. The Ethernet interface and connector ETH_CON support bridging and routing for individual PCs or Ethernet local area networks. The ADSL modem ADSL_MODEM1 is further equipped with an ATMForum connector ATMF_CON and ATMForum interface. The ATMForum interface consists of an ATMForum transmitter connected to the second pair of pins of the ATMForum connector ATMF_CON, and an ATMForum receiver connected to the third pair of pins of the ATMForum connector ATMF_CON. The first and fourth pairs of pins of the ATMForum connector ATMF_CON are left unused. The ATMForum interface and ATMForum connector ATMF_CON provides service transparency and supports ATM-to-the-desktop networking for ATM workstations or multimedia devices and local area networks. The ADSL modem ADSL_MODEM1 further connects to a telephone line through a standard RJ-11 connector, and supports the standard Discrete Multi Tone (DMT) ADSL line coding allowing speeds 60 times faster than ISDN (Integrated Services Digital Network) and 200 times faster than traditional modems. To connect the ADSL modem ADSL_MODEM1 to an Ethernet network, the user has to insert an RJ-45 plug in the Ethernet connector ETH_CON, and has to activate the Ethernet interface through configuration software delivered with the ADSL modem ADSL_MODEM1. Similarly, the user has to insert an RJ-45 plug in the ATMForum connector ATMF_CON, and has to activate the ATMForum interface through configuration software for connection to an ATM network. Insertion of the RJ-45 plug in the wrong connector, and the necessity to activate and configure the right interface through a software application renders the known ADSL modem ADSL_MODEM1 user-unfriendly.

The ADSL modem ADSL_MODEM2 drawn in Fig. 2 is equipped with a single Ethernet/ATMForum connector ETH/ATMF_CON wherein an RJ-45 plug can be inserted. The user can insert the RJ-45 plug of an Ethernet network as well as the RJ-45 plug of an ATM network in the Ethernet/ATMForum connector ETH/ATMF_CON and consequently does not have to worry about insertion of the plug in the wrong connector.

The Ethernet/ATMForum interface drawn in Fig. 3 is connected to the Ethernet/ATMForum connector ETH/ATMF_CON, and consists of a receiver RX, a detector DET, an Ethernet activator ETH_ACT, an ATMForum activator ATMF_ACT, an Ethernet driver ETH_DRV and an ATMForum driver ATMF_DRV. Inputs of the receiver RX are connected to the third pair of pins, P3, of the Ethernet/ATMForum connector ETH/ATMF_CON. The detector is coupled with an input to an output of the receiver RX and has outputs respectively coupled to the Ethernet activator ETH_ACT and the ATMForum activator ATMF_ACT. An output of the Ethernet activator is connected to a control input of the Ethernet driver ETH_DRV, The Ethernet driver ETH_DRV further having an output connected to the first pair of pins, P1, of the Ethernet/ATMForum connector ETH/ATMF_CON. An output of the ATMForum activator ATMF_ACT is connected to a control input of the ATMForum driver ATMF_DRV, the ATMForum driver ATMF_DRV further having an output connected to the second pair of pins, P2, of the Ethernet/ATMForum connector ETH/ATMF_CON. It is evident that the receiver RX, the Ethernet driver ETH_DRV and the ATMForum driver ATMF_DRV in addition also interface with the Discrete Multi Tone (DMT) ADSL processor not drawn in the figure.

When an RJ-45 plug is inserted in the Ethernet/ATMForum connector ETH/ATMF_CON, the first signal received at the third pair of pins, P3, is automatically supplied to the detector DET by the receiver RX. The detector DET is able to discriminate an Ethernet signal from an ATM signal and either instructs the Ethernet activator ETH_ACT to activate the Ethernet driver ETH_DRV in case the received signal is an Ethernet signal, or instructs the ATMForum activator ATMF_ACT to activate the ATMForum driver ATMF_DRV in case the received signal is an ATM signal. Activation of a driver is done by applying an activation signal to a control terminal thereof. The activated driver, i.e. either the Ethernet driver ETH_DRV at the first pair of pins, P1, or the ATMForum driver ATMF_DRV at the second pair of pins, P2, will act as transmitter. For further reception and transmission of signals, the receiver RX and the activated driver, ETH_DRV or ATM_DRV, communicate with the Discrete Multi Tone (DMT) ADSL processor. Thanks to automatic detection of the type of signal, and automatic activation of the corresponding driver, the user does not have to intervene anymore in the configuration of the Ethernet or ATMForum interface. He/she only has to insert the RJ-45 plug in the connector ETH/ATMF_CON.

As already noted above, it should be understood that application of the present invention is not limited to an ADSL modem, and certainly not to a particular type of ADSL modem such as the above described DMT based standard compliant ADSL modem. A wide variety of devices such as other DSL modems, e.g. VDSL or SDSL modems, cable modems, test tools, ISDN terminals, ... typically having an Ethernet interface as well as an ATMForum interface, can be made more cost efficient (less components) and more user-friendly through application of the present invention.

It is further noticed that automatic detection of the type of signal and activation of the line driver as implemented in the above described preferred embodiment of the invention, is not an essential feature of the present invention. The basic concept of the present invention is to integrate the Ethernet connector and ATMForum connector into a single connector. Doing so, required space and components for the connectors are reduced, and the user can no longer insert a plug in the wrong connector rendering installation more user-friendly. This basic concept does not require the Ethernet receiver and ATMForum receiver to be integrated into a single receiver. Both receivers could be connected to the third pair of pins and configuration software could allow the user to activate the correct receiver and driver. Integration of the Ethernet receiver and ATMForum receiver into a single receiver, combined with automatic detection/recognition of the type of signal and automatic activation of the corresponding line driver, allows to further reduce the number of components and to further eliminate the need for user intervention.

Yet another remark is that the components drawn in Fig. 3 may be realized either in hardware or in software. The detector DET for instance can be a software module, able to analyze a received signal and to discriminate an Ethernet signal from an ATM signal. the Ethernet activator ETH_ACT and ATMForum activator ATMF_ACT may be implemented in software or hardware, and obviously can be integrated into a single activation or de-activation module able to activate drivers and/or to de-activate drivers.

Furthermore, it is remarked that an embodiment of the present invention is described above rather in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention.

## Claims

1. Device (ADSL_MODEM2) having Ethernet interfacing capability and ATMForum interfacing capability,
**CHARACTERISED IN THAT** said device (ADSL_MODEM2) is equipped with a single connector (ETH/ATMF_CON) comprising four pairs of pins (P1, P2, P3, P4) able to interface with an Ethernet plug and to interface with an ATMForum plug.

2. Device (ADSL_MODEM2) according to claim 1,
**CHARACTERISED IN THAT** said device further comprises an Ethernet driver (ETH_DRV) with an output coupled to a first pair of pins (P1), an ATMForum driver (ATMF_DRV) with an output coupled to a second pair of pins (P2), and a receiver (RX) with an input coupled to a third pair of pins (P3).

3. Device (ADSL_MODEM2) according to claim 2,
**CHARACTERISED IN THAT** said device further comprises detector means (DET), coupled to said receiver (RX) and able to discriminate a received Ethernet signal from a received ATMForum signal.

4. Device (ADSL_MODEM2) according to claim 3,
**CHARACTERISED IN THAT** said device further comprises Ethernet driver activating means (ETH_ACT), coupled between an output of said detector means (DET) and a control input of said Ethernet driver (ETH_DRV), said Ethernet driver activating means (ETH_ACT) being adapted to activate said Ethernet driver (ETH_DRV), and ATMForum driver activating means (ATMF_ACT), coupled between an output of said detector means (DET) and a control input of said ATMForum driver (ATMF_DRV), said ATMForum driver activating means (ATMF_ACT) being adapted to activate said ATMForum driver (ATMF_DRV).

5. Device (ADSL_MODEM2) according to any one of claims 1 to 4,
**CHARACTERISED IN THAT** said device is an Asymmetric Digital Subscriber Line (ADSL) modem.

6. Device according to any one of claims 1 to 4,
**CHARACTERISED IN THAT** said device is a Very High Speed Digital Subscriber Line (VDSL) modem.

7. Device according to any one of claims 1 to 4,
**CHARACTERISED IN THAT** said device is an Integrated Services Digital Network (ISDN) modem.

8. Device according to any one of claims 1 to 4,
**CHARACTERISED IN THAT** said device is a test apparatus.
